# FASCICULE DE BREVET EUROPEEN

(11) **EP 2 924 694 B1**
(45) Date de publication et mention de la délivrance du brevet: **21.09.2016**
(21) Numéro de dépôt: 15305354.1
(22) Date de dépôt: 09.03.2015
(51) Int. Cl.: H01B 3/46, C08L 83/04

(54) **CABLE COMPORTANT UNE COUCHE ISOLANTE OU DE PROTECTION EXTERIEURE A FAIBLE INDICE DE DEGAGEMENT DE FUMEE**
KABEL MIT ÄUSSERER ISOLIER- ODER SCHUTZSCHICHT MIT NIEDRIGEM QUALMENTWICKLUNGSINDEX
CABLE COMPRISING AN INSULATING OR OUTER PROTECTIVE LAYER WITH LOW SMOKE RELEASE INDEX

(30) Priorité: 27.03.2014 FR 1452652
(43) Date de publication de la demande: 30.09.2015
(73) Titulaire: Nexans, 75008 Paris (FR)
(72) Inventeur: Dalbe, Bernard, 69005 LYON (FR); Perras, Aurélie, 01600 TOUSSIEUX (FR); Marty, Luc, 69110 SAINTE-FOY-LES-LYON (FR)
(74) Mandataire: Feray, Valérie

(56) Documents cités:
- EP-A1- 1 298 161
- US-A1- 2010 105 823
- US-B1- 6 239 378

## Description

La présente invention se rapporte à un câble d'énergie et/ ou de télécommunication comportant au moins une couche isolante et/ ou au moins une gaine extérieure de protection (ou au moins une couche jouant le double rôle d'isolation et de gaine de protection), obtenues à partir d'une composition de caoutchouc silicone réticulable.

Elle s'applique typiquement, mais non exclusivement, à la fabrication de couches d'isolation et de protection (gaine de protection) pour câbles électriques et/ ou de transmissions de données utilisables dans les moyens de transports tels que les matériaux entrant dans la constitution des véhicules ferroviaires à voyageurs, voitures, fourgons, autorails et automotrices et leurs remorques, y compris leurs cabines de conduite, lorsqu'ils en sont équipés, ainsi que celles des véhicules moteurs, etc...

Un câble d'énergie et/ou de télécommunication est un câble destiné au transport de l'énergie électrique et/ou à la transmission de données. Il comprend classiquement un ou plusieurs éléments conducteurs isolés, ou en d'autres termes un ou plusieurs conducteur(s) électrique(s) et/ou optique(s) allongé(s) entouré(s) par au moins une couche isolante. La couche isolante peut être typiquement une couche polymère électriquement isolante en contact physique avec le ou les conducteur(s) électrique(s) et/ ou optique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les 2 fonctions d'isolant électrique et de gaine de protection.

Les matériaux utilisables pour former la couche isolante et/ou ladite gaine de protection sont généralement des matériaux composites à base de polymères, en particulier de polymères siliconés, et de divers adjuvants notamment des charges de renfort telles que de la silice.

Ces matériaux doivent présenter non seulement de bonnes propriétés mécaniques et diélectriques, mais également répondre à certaines contraintes en matière de sécurité. En particulier, les matériaux utilisés dans les moyens de transports doivent présenter un bon comportement au feu notamment en ce qui concerne la propagation de la flamme et le dégagement de fumée. En particulier, les matériaux utilisés à titre d'isolant et/ou de gaine de protection doivent également dégager le moins de fumée possible en cas de combustion (Norme EN 61034-1 & 2). Cette dernière caractéristique minimisera la perte de visibilité et contribuera à diminuer les temps d'évacuation en cas d'incendie. Selon la norme EN 50382, le taux de fumée évalué selon la norme EN 61034-1 & 2, exprimé à travers le pourcentage de lumière transmise, ne doit pas être inférieur à 70%

Cependant, ce problème n'est pas facile à résoudre avec les polymères siliconés entrant dans la composition des gaines de protection ou des couches isolantes, ceux-ci dégageant généralement une épaisse fumée blanche lors de leur combustion.

Il a déjà été proposé de remédier à ce problème, notamment dans le brevet US 6,239,378, qui décrit une composition de caoutchouc vulcanisable offrant des propriétés de retard à l'inflammation. La composition décrite dans ce document comprend de 30 à 90 % en masse d'un polymère organosiloxane non halogéné contenant au moins deux groupements alkényle par molécule, de 1 à 65 % en masse d'une charge de renfort à base de silice, de 5 à 70 % en masse de wollastonite (CaSiO₃) sous forme de particules dont la taille est comprise entre 2 et 30 µm et un agent de vulcanisation. Cependant, cette composition ne donne pas entièrement satisfaction car si elle présente effectivement des propriétés de retard à l'inflammation grâce notamment à la présence de wollastonite, ses propriétés en termes de dégagement de fumées en cas de combustion ne sont pas suffisantes.

Par ailleurs, les solutions proposées ne sont pas forcément compatibles avec la conservation des bonnes propriétés mécaniques et diélectriques des matériaux de protection.

Le but de la présente invention est de pallier ces inconvénients en offrant notamment une couche polymère de protection pour câble d'énergie et/ou de télécommunication obtenue à partir d'une composition réticulable, ladite couche présentant de bonnes propriétés de retard à l'inflammation ainsi qu'un plus faible indice de dégagement de fumée, tout en conservant des propriétés mécaniques et diélectriques satisfaisantes.

La présente invention a donc pour premier objet un câble d'énergie et/ ou de transmission de données comprenant au moins un élément conducteur entouré par au moins une couche polymère réticulée d'isolation et/ ou de protection, ladite couche polymère réticulée étant obtenue à partir d'une composition de caoutchouc silicone résultant de la réticulation, par un peroxyde organique sous l'action de la chaleur, d'une composition réticulable comprenant au moins un polymère siliconé réticulable, au moins une charge inorganique, au moins un composé à base de platine et de l'oxyde de magnésium, caractérisé en ce qu'au sein de ladite composition réticulable, la quantité de charge inorganique est inférieure ou égale à 50 %en masse et la quantité d'oxyde de magnésium (MgO) varie de 1 à 3 %en masse inclusivement, lesdits pourcentages étant exprimés par rapport à la masse totale de ladite composition réticulable.

Plus particulièrement, la couche polymère réticulée peut être une couche isolante électriquement, une gaine extérieure de protection ou une couche assurant à la fois l'isolation électrique et la protection. Notamment, ledit câble d'énergie et/ ou de transmission de données comprend un ou plusieurs éléments conducteurs isolés par ladite couche polymère réticulée, le ou les éléments conducteurs isolés étant éventuellement entourés par ladite gaine extérieure de protection.

Les inventeurs de la présente demande ont en effet mis en évidence que l'utilisation d'un composé à base de platine et d'une quantité judicieusement choisie de MgO présente un effet de synergie sur l'indice de dégagement de fumée en cas de combustion de la ou des couche(s) polymère(s) réticulée(s) d'isolation et/ou de protection entourant le câble, permettant de diminuer de manière très significative la quantité de fumée dégagée par rapport à la quantité de fumée dégagée lors de la combustion de compositions polymères comparatives ne contenant que le composé à base de platine ou que le MgO. Ainsi, lorsque qu'une telle composition de caoutchouc silicone réticulé est utilisée comme matériau d'isolation et/ou de gaine de protection pour câble, elle présente de bonnes propriétés mécaniques et de résistance à la combustion tout en dégageant au moins deux fois moins de fumées qu'une composition obtenue par réticulation d'une composition réticulable ne contenant que l'un de ces deux ingrédients.

Selon l'invention, la nature de la ou des charges inorganiques présentes dans la composition réticulable n'est pas critique à partir du moment ou leur quantité est inférieure ou égale à 50 %en masse.

Les charges inorganiques utilisables dans la composition réticulable selon l'invention, peuvent être des charges renforçant es ou non renforçantes.

Les charges renforçantes sont pour la plupart des silices pyrogénées ou des silices de précipitation ayant typiquement une surface spécifique supérieure à 125 m²/g. Les liaisons entre la charge et le polymère siliconé réticulable permettent d'améliorer les propriétés mécaniques.

Les charges non-renforçantes ont une interaction plus faible avec le polymère siliconé réticulable et peuvent être par exemple du trihydrate d'alumine, de la craie, de la poudre de quartz, du mica, du kaolin, etc...

De façon avantageuse, la quantité totale de charge inorganique représente de 15 à 35 %en masse environ par rapport à la masse totale de la composition réticulable. Egalement, selon une forme de réalisation préférée de l'invention, la composition réticulable est exempte de wollastonite.

Le ou les polymères siliconés réticulables utilisables selon l'invention peuvent être choisis parmi les polyorganosiloxanes de viscosité comprise entre 10 000 m Pa.s et 4 000 000 m Pa.s envi ron à 25°C.

Les viscosités mentionnées dans la présente invention sont typiquement déterminées à l'aide d'appareillages bien connus de l'homme du métier comme par exemple un rhéomètre dynamique, un rhéomètre capillaire Toutes les viscosités mentionnées dans la présente invention sont données à 25°C.

Lesdits polyorganosiloxanes sont généralement représentés par la formule (I) suivante : 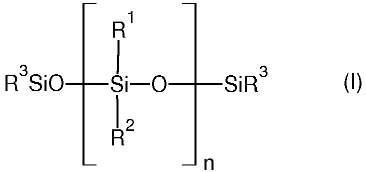 dans laquelle :
- n est un nombre entier désignant le nombre d'unités [-Si(R¹)(R²)-O-] et qui est fonction de la viscosité du polyorganosiloxane, de préférence n est supérieur à 500 ;
- les groupements R¹ et R², identiques ou différents l'un de l'autre et d'une unité à l'autre comprennent des radicaux hydrocarbonés, identiques ou différents, choisis parmi des groupements alkyles, notamment en C₁₋₂₀, halogénoalkyles, cycloalkyles, aralkyles, cyanoalkyles, alkényles, notamment en C₂-₆, halogénoalkényles, cycloalkényles, aryl es, notamment phényle, halogénoaryles et/ ou alkylaryles et
- les groupements R³ sont choisis parmi les groupements hydrocarbonés tels que les groupements alkyle, notamment en C₁-C₆, alcoxyalkyle, notamment en C₁-C₆ et les groupements alkényle en C₂-C₆, notamment vinyle.

Parmi les polyorganosiloxanes de formule (I) ci-dessus, on préfère le polydiméthylsiloxane (PDMS), c'est-à-dire un composé de formule (I) dans lequel R¹ et R² sont identiques entre eux et d'une unité à l'autre et représentent un groupement méthyle et les PDMS comprenant plus de 50 %en nombre d'unités [-Si(R¹)(R²)-O-] dans lesquelles R¹ et R² sont identiques et représentent un groupement méthyle et une faible proportion d'unités [-Si(R¹)(R²)-O-] dans lesquelles l'un des groupements R¹, respectivement R², est un groupement méthyle tandis que l'autre groupement R², respectivement R¹ est un groupement vinyle.

Au sens de la présente invention, on entend par « faible proportion », une proportion d'unités [-Si(R¹)(R²)-O-] correspondant à une quantité de groupements vinyle variant de 200 ppm à 10000 ppm, de préférence 400 ppm à 1000 ppm, par rapport à la masse totale des polyorganosiloxanes de formule (I) dans la composition réticulable.

Selon l'invention, le ou les polymères siliconés représentent de préférence de 45 à 85 %environ en masse par rapport à la masse totale de la composition réticulable, et encore plus préférentiellement de 60 à 80 % en masse environ.

La nature du composé à base de platine n'est pas critique selon l'invention. Il peut notamment être choisi parmi le platine métallique, les sels de platine tels que les chlorures de platine (e.g. dichlorure de platine : PtCl₂, tetrachlorure de platine : PtCl₄) ainsi que parmi les complexes à base de platine tels que par exemple le catalyseur de Karstedt qui est un complexe de platine (0) et de divinyltetraméthylsiloxane. Le composé à base de platine représente de préférence au plus 200 ppm en masse environ par rapport à la masse totale de la composition réticulable, cette quantité étant exprimée en masse d'équivalent de platine métallique. Selon une forme de réalisation particulièrement préférée de l'invention, la quantité de composé à base de platine au sein de la composition réticulable varie de 10 à 80 ppm en masse par rapport à la masse totale de ladite composition, cette quantité étant également exprimée en masse d'équivalent de platine métallique.

Selon une forme de réalisation particulière et préférée de l'invention, la quantité de MgO au sein de la composition réticulable varie de 1,5 à 2,5 %en masse par rapport à la masse totale de ladite composition.

Comme indiqué précédemment, la réticulation de la composition réticulable selon l'invention est réalisée par un peroxyde organique sous l'action de la chaleur.

Dans un mode de réalisation particulier, le peroxyde organique utilisable selon l'invention est un peroxyde di-tertiaire d'alkyle ou d'aralkyle choisi parmi le peroxyde de di-ter-butyle, le peroxyde de 2,4-dichlorobenzoyle (DCBP), le peroxyde de di(ter-butylperoxyisopropyl)benzène, le peroxyde de dicumyle, et le 2,5-diméthyl-2,5-di(ter-butylperoxy)hexane (DBPH). Parmi ces peroxydes, le peroxyde de 2,4-dichlorobenzoyle tel que le produit vendu sous la dénomination commerciale Luperox® DCBP par la société Arkema est préféré.

La quantité de peroxyde organique au sein de la composition réticulable peut varier de 0,5 à 2,5 %en masse environ, et plus préférentiellement de 1 à 2 % en masse environ par rapport à la masse totale de ladite composition réticulable.

La composition réticulable peut également contenir un composé qui permet de capter l'humidité qui peut être résiduelle dans les polymères, les charges et/ ou les additifs utilisées dans la présente invention. Selon une forme de réalisation préférée de l'invention, le composé capteur d'humidité est l'oxyde de calcium (CaO).

Lorsqu'il est utilisé, le CaO représente de préférence de 1 à 3 %en masse environ par rapport à la masse totale de la composition réticulable.

La composition réticulable peut en outre renfermer un ou plusieurs additifs bien connus de l' homme du métier comme par exemple un additif pour améliorer la tenue thermique tel que des particules nanométriques de TiO₂, de l'oxyde de fer, du noir de carbone, etc ...

Un autre objet selon la présente invention est un procédé de fabrication dudit câble d'énergie et/ou de télécommunication tel que défini selon le premier objet de l'invention, ledit procédé étant caractérisé en ce qu'il comprend les étapes consistant à :
1) mettre en oeuvre la composition réticulable définie précédemment, de préférence par extrusion, pour former au moins une couche polymère d'isolation et/ ou de protection dudit câble, la composition ayant notamment une viscosité Mooney ML (1+4) d'au plus 70 MU (et préférentiellement entre 30 et 50 MU) mesurée à 32°C selon la norme ASTM D1646-04, et
2) réticuler la couche isolante et/ou de protection formée à l'étape 1) précédente sous l'action de la chaleur.

Lors de l'étape 1) d'extrusion, la température de mise en oeuvre de la composition réticulable doit être suffisamment basse pour éviter la réticulation du ou des polymères siliconés réticulables (i.e. la vulcanisation) durant tout le temps de la mise en oeuvre.

En pratique, l'étape 1) d'extrusion de la composition réticulable est de préférence réalisée à une température inférieure à 45°C, et encore plus préférentiellement à une température variant de 20 à 35°C environ.

L'étape 2) de réticulation est, quand à elle, réalisée à une température supérieure permettant une décomposition rapide dudit peroxyde organique afin de réticuler, par voie peroxyde, la couche polymère d'isolation et/ou de protection formée à l'étape 1).

En pratique, l'étape 2) de réticulation est de préférence réalisée à une température supérieure à 160°C, et encore plus préférentiellement à une température variant de 180 à 220°C environ en fonction du type de peroxyde utilisé.

Enfin, l'invention a également pour objet la composition de caoutchouc silicone utilisée selon les premier et second objets de l'invention et résultant de la réticulation, par un peroxyde organique sous l'action de la chaleur, d'une composition réticulable comprenant au moins un polymère siliconé réticulable, au moins une charge inorganique, au moins un composé à base de platine et de l'oxyde de magnésium. Elle est caractérisée en ce qu'au sein de ladite composition réticulable, la quantité de charge inorganique est inférieure ou égale à 50 %en masse et la quantité d'oxyde de magnésium (MgO) varie de 1 à 3 %en masse inclusivement, lesdits pourcentages étant exprimés par rapport à la masse totale de ladite composition réticulable.

D'autres caractéristiques et avantages de la présente invention apparaîtront à la lumière des exemples qui vont suivre en référence, lesdits exemples étant donnés à titre illustratif et nullement limitatif.

### EXEMPLES

### EXEMPLE 1 : Mise en évidence du faible niveau de dégagement de fumées lors de la combustion d'une composition de caoutchouc silicone conforme à l'invention

Dans cet exemple, on a testé la quantité de fumée dégagée lors de la combustion d'une composition de caoutchouc silicone obtenue par réticulation d'une composition réticulable conforme à l'invention, comparativement à une composition ne faisant pas partie de l'invention.

### 1.a. Principe du test

Le test a été réalisé l'aide d'un calorimètre à cône vendu sous la dénomination commerciale Cone Calorimeter par la société FTT (Fire Testing Technology), selon le protocole préconisé par le fabricant.

Il s'agit d'un appareil conçu pour mesurer le comportement au feu de certains matériaux, en particulier des matériaux polymères.

Durant le test, la surface de l'échantillon à tester est impactée par un flux radiatif qui est en pratique de 35 kW·m⁻² (incendie déclaré) ou 50 kW·m⁻² (incendie largement développé et conditions de pré-embrasement généralisé éclair, également connu sous l'anglicisme pré*-«flashover»)* et pouvant atteindre 100 kW·m⁻², permettant de simuler différentes étapes d'un scénario feu. Le principe de la mesure du débit calorifique est basé sur celui de Huggett C. [« Estimation of Rate of Heat Release by Means of Oxygen Consumption Calorimetry », Fire Mater., 4(2), 61-65 (1980)], qui stipule que la chaleur de combustion d'un matériau organique est directement reliée à la quantité d'oxygène nécessaire à sa combustion.

### 1.b. Caoutchoucs silicones testés

On a préparé deux compositions de caoutchouc silicone par réticulation des deux compositions réticulables suivantes dont les constituants sont énumérés dans le tableau 1 ci-après:

**TABLEAU 1**

| **Compositions réticulables (CR)** | **CR1 ^{(*)}** | **CR2** |
|---|---|---|
| Base silicone | 100 g | 100 g |
| **MgO** | **0,5 g** | **3 g** |
| Additif contenant le composé au platine (environ 0,5 %de Pt métal en masse) | 0, 8 g | 0, 8 g |
| Peroxyde de 2,4-dichlorobenzoyle | 2 g | 2 g |

| | | |
|---|---|---|
| (*) composition ne faisant pas partie de l'invention | | |

L'origine des constituants du Tableau 1 est la suivante :
- Base silicone vendue sous la dénomination commerciale ELASTOSIL® R 510/60 par la société Wacker Chemie et composée de polyorganosiloxane, d'environ 23 %de silice et d'un agent anti-restructuration (polyorganosiloxane de très faible masse moléculaire) ;
- l'oxyde de magnésium a été fourni par la société Premier Chemicals ;
- à titre d'additif contenant le composé au platine, on a utilisé le produit vendu sous la dénomination commerciale HFR1 par la société Bluestar Silicones, qui est un mélange contenant un polyorganosiloxane, de la silice et le complexe de platine de Karstedt ;
- le peroxyde de 2,4-dichlorobenzoyle a été fourni par la société Arkema sous la dénomination commerciale Luperox® DCBP.

Les compositions CR1 et CR2 ont été mises en oeuvre sous presse à 115°C pendant 8 min (réticulation par voie thermique) pour obtenir des compositions de caoutchouc silicone réticulées (CCR) correspondantes, respectivement CCR1 et CCR2. Le test de dégagement de fumée a ensuite été réalisé sur des échantillons de 100 x 100 x 3 mm de chacune des compositions CCR1 et CCR2.

### 1.c. Résultats

Les résultats obtenus sont reportés dans le tableau 2 ci-après :

**TABLEAU 2**

| **Compositions** | **CCR1 ^{(*)}** | **CCR2** |
|---|---|---|
| TSR : Quantité de fumée dégagée (m²/ m²) | 1023 | 405 |
| SEA (m²/ kg) | 844 | 419 |

| | | |
|---|---|---|
| (*) ne fait pas partie de la présente invention | | |

Dans ce tableau, l'acronyme TSR correspond à l'expression anglophone *« Total Emoke Release* » qui renseigne sur la quantité de fumée dégagée lors de la combustion d'un matériau et l'acronyme SEA correspond à l'expression anglophone *« Specific Extinction Area* » qui renseigne sur le potentiel de production de fumée d'un matériau.

Ces résultats démontrent que lorsque la composition réticulable contient du MgO dans une quantité suffisante, le volume total de fumée dégagé est réduit par un facteur d'environ 2,5 par rapport à une composition comparative dans laquelle le MgO est utilisé en quantité insuffisante.

### EXEMPLE 2 : Mise en évidence d'un effet de synergie entre le composé à base de platine et le MgO sur le niveau de dégagement de fumées lors de la combustion de compositions de caoutchouc silicone

Dans cet exemple, on a testé l'effet de la présence simultanée d'un composé à base de platine et de MgO sur le niveau de dégagement de fumée selon le test de combustion détaillé ci-dessus à l'exemple 1, comparativement à des compositions comparatives ne contenant que l'un de ces deux constituants.

On a ainsi préparé les compositions réticulables suivantes dont les constituants sont énumérés dans le tableau 3 ci-après :

**TABLEAU 3**

| **Compositions réticulables (CR)** | **CR3 ^{(*)}** | **CR4 ^{(*)}** | **CR5 ^{(*)}** | **CR6** | **CR7** | **CR8 ^{(**)}** |
|---|---|---|---|---|---|---|
| Base silicone | 100 g | 100 g | 100 g | 100 g | 100 g | 100 g |
| **MgO** | **1,5 g** | **0 g** | **0 g** | **1,5 g** | **1,5 g** | **0** |
| **Additif contenant le composé au platine** (HFR1 ) | **0 g** | **2,0 g** | **1,0 g** | **2,0 g** | **1,0** | **0** |
| CaO | 0 g | 0 g | 1,5 g | 0 g | 0 g | 0 |
| Peroxyde de 2,4-dichlorobenzoyle | 1,5 g | 1,5 g | 1,5 g | 1,5 g | 1,5 g | 1,5 g |

| | | | | | | |
|---|---|---|---|---|---|---|
| (*) Composition ne faisant pas partie de l'invention (**) Témoin | | | | | | |

Les constituants mentionnés dans le tableau 3 ci-dessus sont les mêmes que ceux de l'exemple 1 ; l'oxyde de calcium a été obtenu auprès de la société Omya.

Les compositions réticulables présentées dans le tableau 3 ci-dessus ont ensuite été mises en oeuvre sous presse à 115°C pendant 8 min (réticulation par voie thermique) pour obtenir des compositions de caoutchouc silicone réticulées (CCR) correspondantes, respectivement CCR3 à CCR8. Le test de dégagement de fumée tel que décrit ci-dessus à l'exemple 1 a ensuite été réalisé sur des échantillons de 100 x 100 x 3 mm pour chacune des compositions CCR3 à CCR8.

Les résultats obtenus sont présentés dans le Tableau 4 ci-après :

**TABLEAU 4**

| **Compositions** | **CCR3 ^{(*)}** | **CCR4 ^{(*)}** | **CCR5 ^{(*)}** | **CCR6** | **CCR7** | **CCR8 ^{(**)}** |
|---|---|---|---|---|---|---|
| TSR : Quantité de fumée dégagée (m²/m²) | 1368 | 1320 | 977 | 531 | 529 | 1636 |
| SEA (m²/kg) | 939 | 921 | 689 | 498 | 488 | 1071 |

| | | | | | | |
|---|---|---|---|---|---|---|
| (*) Composition ne faisant pas partie de l'invention (**) Témoin | | | | | | |

Ces résultats mettent en évidence l'effet de la présence simultanée du composé de platine et du MgO dans les compositions réticulables conformes à l'invention (CR6 et CR7) conduisant à des compositions de caoutchouc silicone réticulées présentant un niveau de dégagement de fumée qui est diminué d'un facteur supérieur à 2 par rapport aux compositions comparatives ne contenant qu'un seul de ces deux constituants. Ces résultats sont d'autant plus surprenants que selon l'enseignement de l'exemple 7 du brevet US 6,239,378 où l'on observe qu'une composition réticulable comprenant un mélange de polymères siliconés réticulables, une terre de diatomée à titre de charge inorganique, un mélange d'aluminium trihydrate et de MgO à titre de composants réducteurs de fumée (exemple 7.1) ne passe pas le test de dégagement de fumée, alors qu'une composition équivalente contenant de la wollastonite, et uniquement un composé à base de platine mais pas de MgO (exemple 7.2) satisfait au test de dégagement de fumée. L'enseignement du document US 6,239,378 est par conséquent contre-intuitif et n'incite donc pas à utiliser simultanément un composé à base de platine et du MgO dans le but de réduire le dégagement de fumée.

## Revendications

1. Câble d'énergie et/ou de télécommunication comprenant au moins un élément conducteur entouré par au moins une couche polymère réticulée d'isolation et/ou de protection, ladite couche polymère réticulée étant obtenue à partir d'une composition de caoutchouc silicone résultant de la réticulation, par un peroxyde organique sous l'action de la chaleur, d'une composition réticulable comprenant au moins un polymère siliconé réticulable, au moins une charge inorganique, au moins un composé à base de platine et de l'oxyde de magnésium, **caractérisé en ce qu'**au sein de ladite composition réticulable, la quantité de charge inorganique est inférieure ou égale à 50 %en masse et la quantité d'oxyde de magnésium (MgO) varie de 1 à 3 %en masse inclusivement, lesdits pourcentages étant exprimés par rapport à la masse totale de ladite composition réticulable.

2. Câble selon la revendication 1, **caractérisé en ce que** la couche polymère réticulée est une couche isolante électriquement, une gaine extérieure de protection ou une couche assurant à la fois l'isolation électrique et la protection.

3. Câble selon la revendication 1 ou 2, **caractérisé en ce qu'**il comprend un ou plusieurs éléments conducteurs isolés par ladite couche polymère réticulée, le ou les éléments conducteurs isolés étant éventuellement entourés par ladite gaine extérieure de protection.

4. Câble selon l'une quelconque des revendications précédentes, **caractérisé en ce que** la quantité totale de charge inorganique représente de 15 à 35 %en masse par rapport à la masse totale de la composition réticulable.

5. Câble selon l'une quelconque des revendications précédentes, **caractérisé en ce que** les polymères siliconés sont choisis parmi les polyorganosiloxanes.

6. Câble selon l'une quelconque des revendications précédentes, selon l'une quelconque des revendications précédentes, **caractérisé en ce que** le ou les polymères siliconés représentent de 45 à 85 %en masse par rapport à la masse totale de la composition réticulable.

7. Câble selon l'une quelconque des revendications précédentes, **caractérisé en ce que** le composé de platine est choisi parmi le platine métallique, les sels de platine et les complexes à base de platine.

8. Câble selon l'une quelconque des revendications précédentes, **caractérisé en ce que** le composé à base platine représente au plus 200 ppm en masse par rapport à la masse totale de la composition réticulable, cette quantité étant exprimée en masse d'équivalent de platine métallique.

9. Câble selon la revendication 8, **caractérisé en ce que** la quantité de composé à base de platine au sein de la composition réticulable varie de 10 à 80 ppm en masse par rapport à la masse totale de ladite composition, cette quantité étant exprimée en masse d'équivalent de platine métallique.

10. Câble selon l'une quelconque des revendications précédentes, **caractérisé en ce que** la quantité de MgO au sein de la composition réticulable varie de 1,5 à 2,5 % en masse par rapport à la masse totale de ladite composition.

11. Câble selon l'une quelconque des revendications précédentes, **caractérisé en ce que** le peroxyde est un peroxyde di-tertiaire d'alkyle ou d'aralkyle choisi parmi le peroxyde de di-ter-butyle, le peroxyde de 2,4-dichlorobenzoyle, le peroxyde de di(ter-butylperoxyisopropyl)benzène, le peroxyde de dicumyle, et le 2,5-diméthyl-2,5-di(ter-butylperoxy)hexane.

12. Câble selon l'une quelconque des revendications précédentes, **caractérisé en ce que** la quantité de peroxyde organique au sein de la composition réticulable varie de 0,5 à 2,5 %en masse, par rapport à la masse totale de ladite composition réticulable.

13. Câble selon l'une quelconque des revendications précédentes, **caractérisé en ce que** la composition réticulable comprend au moins un composé capteur d'humidité.

14. Câble selon la revendication 13, **caractérisé en ce que** le capteur d'humidité est l'oxyde de calcium.

15. Procédé de fabrication d'un câble d'énergie et/ ou de télécommunication tel que défini à l'une quelconque des revendications 1 à 14, ledit procédé étant **caractérisé en ce qu'**il comprend les étapes consistant à :
1) mettre en oeuvre la composition réticulable définie précédemment, de préférence par extrusion, pour former au moins une couche polymère d'isolation et/ ou de protection dudit câble, la composition ayant notamment une viscosité Mooney ML (1+4) d'au plus 70 M.U. mesurée à 32°C selon la norme ASTM D1646-04, et
2) réticuler la couche isolante et/ou de protection formée à l'étape 1) précédente sous l'action de la chaleur.

16. Composition de caoutchouc silicone résultant de la réticulation, par un peroxyde organique sous l'action de la chaleur, d'une composition réticulable comprenant au moins un polymère siliconé réticulable, au moins une charge inorganique, au moins un composé à base de platine et de l'oxyde de magnésium, **caractérisée en ce qu'**au sein de ladite composition réticulable, la quantité de charge inorganique est inférieure ou égale à 50 %en masse et la quantité d'oxyde de magnésium (MgO) varie de 1 à 3 %en masse inclusivement, lesdits pourcentages étant exprimés par rapport à la masse totale de ladite composition réticulable.

## Patentansprüche

1. Energie- und/oder Telekommunikationskabel, umfassend mindestens ein leitendes Element, das von mindestens einer vernetzten Isolations- und/oder Schutzschicht umgeben ist, wobei die vernetzte Polymerschicht aus einer Silikonkautschukzusammensetzung, die aus der Vernetzung mittels eines organischen Peroxids unter Einwirkung von Wärme resultiert, einer vernetzbaren Zusammensetzung, die mindestens ein vernetzbares silikonhaltiges Polymer, mindestens eine anorganische Charge, mindestens eine Verbindung auf der Basis von Platin und Magnesiumoxid gewonnen ist, **dadurch gekennzeichnet, dass** innerhalb der vernetzbaren Zusammensetzung die Menge der anorganischen Charge kleiner oder gleich 50 Ma% beträgt und die Menge des Magnesiumoxids (MgO) von 1 bis 3 Ma% inklusive schwankt, wobei die Prozentsätze in Bezug auf die Gesamtmasse der vernetzbaren Zusammensetzung ausgedrückt sind.

2. Kabel nach Anspruch 1, **dadurch gekennzeichnet, dass** die vernetzte Polymerschicht eine elektrisch isolierende Schicht, eine äußere Schutzhülle oder eine Schicht, die gleichzeitig die elektrische Isolation und den Schutz sichert, ist.

3. Kabel nach Anspruch 1 oder 2, **dadurch gekennzeichnet, dass** es ein oder mehrere von der vernetzten Polymerschicht isolierte leitende Elemente umfasst, wobei der oder die isolierten leitenden Elemente eventuell von der äußeren Schutzhülle umgeben sind.

4. Kabel nach einem der vorangehenden Ansprüche, **dadurch gekennzeichnet, dass** die Gesamtmenge der anorganischen Charge 15 bis 35 Ma% in Bezug auf die Gesamtmasse der vernetzbaren Zusammensetzung darstellt.

5. Kabel nach einem der vorangehenden Ansprüche, **dadurch gekennzeichnet, dass** die silikonhaltigen Polymere aus den Polyorganosiloxanen ausgewählt sind.

6. Kabel nach einem der vorangehenden Ansprüche, nach einem der vorangehenden Ansprüche, **dadurch gekennzeichnet, dass** das oder die silikonhaltigen Polymere 45 bis 85 Ma% in Bezug auf die Gesamtmasse der vernetzbaren Zusammensetzung darstellen.

7. Kabel nach einem der vorangehenden Ansprüche, **dadurch gekennzeichnet, dass** die Platinverbindung aus dem metallischen Platin, den Platinsalzen und den Komplexen auf Platinbasis ausgewählt ist.

8. Kabel nach einem der vorangehenden Ansprüche, **dadurch gekennzeichnet, dass** die Verbindung auf Platinbasis massenmäßig höchsten 200 ppm in Bezug auf die Gesamtmasse der vernetzbaren Zusammensetzung darstellt, wobei diese Menge in Massenäquivalent des metallischen Platins ausgedrückt ist.

9. Kabel nach Anspruch 8, **dadurch gekennzeichnet, dass** die Menge der Verbindung auf Platinbasis innerhalb der vernetzbaren Zusammensetzung massenmäßig von 10 bis 80 ppm in Bezug auf die Gesamtmasse der vernetzbaren Zusammensetzung schwankt, wobei diese Menge in Massenäquivalent des metallischen Platins ausgedrückt ist.

10. Kabel nach einem der vorangehenden Ansprüche, **dadurch gekennzeichnet, dass** die Menge des MgO innerhalb der vernetzbaren Zusammensetzung von 1,5 bis 2,5 Ma% in Bezug auf die Gesamtmasse der vernetzbaren Zusammensetzung schwankt.

11. Kabel nach einem der vorangehenden Ansprüche, **dadurch gekennzeichnet, dass** das Peroxid ein Alkyl- oder Aralkylditertiärperoxid ist, das aus dem Di-ter-butylperoxid, dem 2,4-Dichlorbenzoylperoxid, dem Di(ter-butylperoxyisopropyl)benzolperoxid, dem Dicumylperoxid und dem 2,5-Dimethyl-2,5-di(ter-butylperoxy)hexan ausgewählt ist.

12. Kabel nach einem der vorangehenden Ansprüche, **dadurch gekennzeichnet, dass** die Menge des organischen Peroxids innerhalb der vernetzbaren Zusammensetzung von 0,5 bis 2,5 Ma% in Bezug auf die Gesamtmasse der vernetzbaren Zusammensetzung schwankt.

13. Kabel nach einem der vorangehenden Ansprüche, **dadurch gekennzeichnet, dass** die vernetzbare Zusammensetzung mindestens eine feuchtigkeitsfangende Verbindung umfasst.

14. Kabel nach Anspruch 13, **dadurch gekennzeichnet, dass** der Feuchtigkeitsfänger Calciumoxid ist.

15. Herstellungsverfahren eines Energie- und/oder Telekommunikationskabels nach einem der Ansprüche 1 bis 14, wobei das Verfahren **dadurch gekennzeichnet ist, dass** es die folgenden Schritte umfasst:
1) Verarbeiten der zuvor definierten vernetzbaren Zusammensetzung vorzugsweise durch Extrusion, um mindestens eine Isolations- und/oder Schutzpolymerschicht des Kabels zu bilden, wobei die Zusammensetzung vor allem eine Viskosität Mooney ML (1+4) von höchstens 70 M.U. hat, gemessen bei 32 °C gemäß der Norm ASTM D1646-04, und
2) Vernetzen der in vorangegangenem Schritt 1) gebildeten Isolations- und/oder Schutzschicht unter der Einwirkung von Wärme.

16. Silikonkautschukzusammensetzung, die aus der Vernetzung mittels eines organischen Peroxids unter der Einwirkung von Wärme einer vernetzbaren Zusammensetzung resultiert, umfassend mindestens ein vernetzbares silikonhaltiges Polymer, mindestens eine anorganischen Charge, mindestens eine Verbindung auf der Basis von Platin und von Magnesiumoxid, **dadurch gekennzeichnet, dass** innerhalb der vernetzbaren Zusammensetzung die Menge der anorganischen Charge kleiner oder gleich 50 Ma% ist und die Menge des Magnesiumoxids (MgO) von 1 bis 3 Ma% inklusive schwankt, wobei die Prozentsätze in Bezug auf die Gesamtmasse der vernetzbaren Zusammensetzung ausgedrückt sind.

## Claims

1. A power and/or telecommunications cable comprising at least one conductive element surrounded by at least one insulating and/or protective cross-linked polymer layer, said cross-linked polymer layer being obtained from a silicone rubber composition resulting from the cross-linking, by an organic peroxide under the action of heat, of a cross-linkable composition comprising at least one cross-linkable silicone polymer, at least one inorganic filler, at least one platinum- and magnesium oxide-based compound, **characterized in that** within said cross-linkable composition the amount of inorganic filler is 50 % by weight or less and the amount of magnesium oxide (MgO) varies from 1 to 3 weight % inclusive, said percentages being expressed relative to the total weight of said cross-linkable composition.

2. The cable according to claim 1, **characterized in that** the cross-linked polymer layer is an electrically insulating layer, an outer protective cladding or layer ensuring both electrical insulation and protection.

3. The cable according to claim 1 or 2, **characterized in that** it comprises one or more conductive elements insulated by said cross-linked polymer layer, the insulated conductive element(s) optionally being surrounded by said outer protective cladding.

4. The cable according to any of the preceding claims, **characterized in that** the total amount of inorganic filler represents 15 to 35 % by weight relative to the total weight of the cross-linkable composition.

5. The cable according to any of the preceding claims, **characterized in that** the silicone polymers are selected from among polyorganosiloxanes.

6. The cable according to any of the preceding claims, **characterized in that** the silicone polymer(s) represent 45 to 85 % by weight relative to the total weight of the cross-linkable composition.

7. The cable according to any of the preceding claims, **characterized in that** the platinum compound is selected from among metallic platinum, platinum salts and platinum-containing complexes.

8. The cable according to any of the preceding claims, **characterized in that** the platinum-based compound represents no more than 200 ppm by weight relative to the total weight of the cross-linkable composition, this amount being expressed in equivalent weight of metallic platinum.

9. The cable according to claim 8, **characterized in that** the amount of platinum-based compound within the cross-linkable composition varies from 10 to 80 ppm by weight relative to the total weight of said composition, this amount being expressed in equivalent weight of metallic platinum.

10. The cable according to any of the preceding claims, **characterized in that** the amount of MgO within the cross-linkable composition varies from 1.5 to 2.5 % by weight relative to the total weight of said composition.

11. The cable according to any of the preceding claims, **characterized in that** the peroxide is an alkyl or aralkyl di-tertiary peroxide selected from among di-tert-butyl peroxide, 2,4-dichlorobenzoyl peroxide, di(tert-butylperoxyisopropyl)benzene peroxide, dicumyl peroxide and 2,5-dimethyl-2,5-di(tert-butylperoxy)hexane.

12. The cable according to any of the preceding claims, **characterized in that** the amount of organic peroxide within the cross-linkable composition varies from 0.5 to 2.5 % by weight relative to the total weight of said cross-linkable composition.

13. The cable according to any of the preceding claims, **characterized in that** the cross-linkable composition comprises at least one moisture-absorbing compound.

14. The cable according to claim 13, **characterized in that** the moisture-absorbing compound is calcium oxide.

15. A process to manufacture a power and/or telecommunications cable such as defined in any of claims 1 to 14, said process being **characterized in that** it comprises the steps of:
1) forming the previously defined cross-linkable composition, preferably by extrusion, to form at least one insulating and/or protective polymer layer of said cable, the composition particularly having a Mooney ML( 1+4) viscosity of no more than 70 M.U. measured at 32°C as per standard ASTM D1646-04, and
2) cross-linking the insulating and/or protective layer formed at previous step 1) under the action of heat.

16. A silicone rubber composition resulting from the cross-linking, by an organic peroxide under the action of heat, of a cross-linkable composition comprising at least one cross-linkable silicone polymer, at least one inorganic filler, at least one platinum- and magnesium oxide-based compound, **characterized in that** within said cross-linkable composition the amount of inorganic filler is 50 weight % or less and the amount of magnesium oxide (MgO) varies from 1 to 3 weight % inclusive, said percentages being expressed relative to the total weight of said cross-linkable composition.
